# EUROPEAN PATENT SPECIFICATION

(11) **EP 2 962 549 B1**
(45) Date of publication and mention of the grant of the patent: **20.12.2017**
(21) Application number: 14756922.2
(22) Date of filing: 25.02.2014
(51) Int. Cl.: B29C 53/10, B32B 27/00, B32B 38/00, A01G 9/14, A01G 13/02

(54) **METHOD FOR MANUFACTURING AGRICULTURAL FILM, AND AGRICULTURAL FILM**
VERFAHREN ZUR HERSTELLUNG EINES LANDWIRTSCHAFTLICHEN FILMS UND LANDWIRTSCHAFTLICHER FILM
PROCÉDÉ DE FABRICATION D'UN FILM AGRICOLE ET FILM AGRICOLE

(30) Priority: 27.02.2013 JP 2013037269
(43) Date of publication of application: 06.01.2016
(73) Proprietor: C. I. Kasei Company, Limited, Tokyo 104-8321 (JP)
(72) Inventor: IGARASHI, Satoshi, Tokyo 104-8321 (JP); CHIEDA, Manabu, Tokyo 104-8321 (JP); FUKUDA, Takuro, Tokyo 104-8321 (JP); KARUBE, Junichi, Tokyo 104-8321 (JP)
(74) Representative: Suèr, Steven Johannes
(86) International application number: PCT/JP2014/054449
(87) International publication number: WO 2014/132945

(56) References cited:
- JP-A- S5 193 963
- JP-A- H11 127 700
- JP-A- 2000 355 460
- JP-A- 2003 103 630
- US-A- 4 674 999

## Description

### TECHNICAL FIELD

The present invention relates to a method for manufacturing a long-term applicable wide agricultural polyolefin-based film which is used for plastic greenhouse culture or tunnel culture and has excellent crease tear resistance. Namely, the present invention relates to a so-called agricultural film and to the agricultural film.

### BACKGROUND ART

The agricultural film, such as an agricultural polyolefin-based film formed by an inflation molding method, has been preferably used because it is adapted for the production of a wide film having a width of 10m or more, negating the need for width joining and hence is free from fusion failure or the like at joint portions (see, for example, Patent Literature 1).

In general, the agricultural film contains a large amount of antifog additive for imparting an antifog property or is coated with an antifog coating material. However, the agricultural film has its surface smoothened for transparency property and hence, is prone to film-to-film adhesion. The tendency is particularly notable in the film formed in summer. In this connection, there has been proposed an agricultural film adapted to eliminate the film-to-film adhesion (see, Patent Literature 2).

This agricultural film according to an embodiment is manufactured by: forming a tube from a composition added with an antifogging agent including a sorbitan-based or glycerin-based surfactant by a well-known inflation molding method, followed by gazette-folding the tube. The gazette-folding means, for example, double-leafed folding where an incision is longitudinally formed substantially at the center of a fold width of the tube. Air is injected between film-to-film contact surfaces. The air injection is performed by inserting an air nozzle or the like into the tube from the incision and injecting the air toward a crease. In a case where the film sustains film-to-film adhesion at a portion where an outside surface thereof is folded inwards, work efficiency of a film unfolding operation or a film extending operation is improved by inserting the air nozzle or the like in the folded part from the outside surface of the film, followed by injecting the air.

### Citation List

### Patent Literature

Patent Literature 1: Japanese Unexamined Patent Application Publication No. 2000-355460
Patent Literature 2: Japanese Unexamined Patent Application Publication No. Hei 11-127700

### SUMMARY OF THE INVENTION

### Technical Problem

However, in the case where the agricultural film disclosed in Patent Literature 2 is formed with an antifog coating film and gazette-folded as shown in Fig. 1 of the written amendment, the film includes a valley fold portion where the film is folded inwards so that the antifog coating film is prone to cracks at this crease. Further, the crack formation is followed by coating film separation which results in antifog failure.

In view of the foregoing, the present invention has been accomplished and has an object to provide a method for manufacturing agricultural film which enables the production of an agricultural film formed with the antifog coating film, the agricultural film made less prone to crack formation or coating film separation at the crease thereof and achieving excellent durability.

### Solution to Problem

Next, description is made on solutions to the above-described problem with reference to drawings corresponding to embodiments.

According to a first aspect of the present invention, there is provided: a method of manufacturing agricultural film comprising the steps of: flattening an elongate tubular film into a band body having a constant width; characterised in that the method further comprises: forming an antifog coating film on an outer periphery of the band body; cutting a lower film or an upper film of the band body after the drying of the antifog coating film by forming a slit at a predetermined position in a widthwise direction of the band body and in a longitudinal direction in which the band body is formed; folding the band body into four layers, with widthwise opposite edges overlapping each other; and winding the fourfold band body into a roll.

Conveniently, the band body is folded in a manner to place the slit outside.

Preferably, the band body is folded in a manner to place the slit inside.

Conveniently, a folding position of the band body is in conformity with the slit or at a distance of substantially 0 to 10 cm from the slit edge.

Preferably, in the folding step, the band body is folded with widthwise opposite edges thereof misaligned from each other by a predetermined amount.

Conveniently, the predetermined amount is in the range of substantially 1 to 30 mm.

According to a second aspect of the present invention, there is provided: an agricultural film comprising: an elongate tubular film flattened out into a band body having a constant width; the band body having a slit at a predetermined position in the widthwise direction of the band body and in a longitudinal direction in which the band body is formed; characterised in that the film further comprises: an antifog coating film on an outer periphery of the band body; and a band body folded into four layers with widthwise opposite edges overlapping each other, the band body being wound into a roll.

Preferably, the band body is folded in a manner to place the slit outside.

Conveniently, the band body is folded in a manner to place the slit inside.

Preferably, a fold portion of the band body is in conformity with the slit or at a distance of substantially 0 to 10 cm from the slit edge.

Conveniently, the band body is folded with widthwise opposite edges thereof misaligned from each other by a predetermined amount.

Preferably, the predetermined amount is in the range of substantially 1 to 30 mm.

In a method for manufacturing the agricultural film 11, the tubular agricultural film 11 is flattened into the band body 19 and the antifog coating film is formed on the outer periphery thereof. The band body 19 is transformed to a center folded band body 19 by folding the band body 19 on the slit 37 formed substantially at the center of the width thereof and placed outside. The center folded band body 19 has a pair of mountain fold portions 45 vertically overlapped on one widthwise side 49 thereof and one mountain fold portion 45 and slit edges 61 overlapped on the other widthwise side 51 thereof. Namely, the center folded band body 19 is substantially folded into an M-shape or four layers. Accordingly, even a wide agricultural film is wound into a compact configuration.

In a method for manufacturing the agricultural film 11, the tubular agricultural film 11 is flattened into the band body 19 and the antifog coating film is formed on the outer periphery thereof. The band body 19 is transformed to a center folded band body 19 by folding the band body 19 on the slit 37 formed substantially at the center of the width thereof and placed inside. The center folded band body 19 has a pair of mountain fold portions 45 vertically overlapped on one widthwise side 49 thereof and one mountain fold portion 45 on the other widthwise side 51 thereof. Namely, the center folded band body 19 is folded in four layers. The antifog coating film is formed on the outside of each of these mountain fold portions 45, but is not formed on an inside portion across the agricultural film 11 from the mountain fold portion 45, namely the valley fold portion 47. This ensures that the valley fold portion 47 is less prone to crack formation and the like after the band body 19 is unfolded, the cracks and the like resulting from face-to-face contact between antifog coating film bearing surfaces of the overlapped films.

In a method for manufacturing the agricultural film 11, the folding position is at the distance of 0 to 10 cm from the slit 37. The folded band body 19 is in four layers and has the pair of mountain fold portions 45 vertically overlapped on one widthwise side 49 thereof. On the other widthwise side 51, the film is doubled to form double mountain fold portions 45, 46. In the meantime, double valley fold portions 47, 48 are formed on the other widthwise side 51 of the film. A fold-back portion between an edge of the slit 37 and the folding position (fold edge 57) is a flap-like edge portion 59, which serves as a reserve edge portion of the unfolded agricultural film 11 and is usable as an edge portion for fixing the extended agricultural film to an agricultural plastic greenhouse or the like.

In a method for manufacturing the agricultural film 11, the longer one edge 53 of the overlapped edges 53, 55 may be used as a tab which can be held for turning over the longer edge relative to the other edge 55. Thus, the overlapped edges 53, 55 can be easily separated from each other.

In a method for manufacturing the agricultural film 11, there is no shortage of the tab amount because of a misalignment amount of 1 mm or less, or no difficulty in turning over the edge because of a misalignment amount of 30 mm or more so that the misaligned portion is folded back or a distance between the one edge 53 and the other edge 55 in the misaligned relation is excessively long.

According to an agricultural film 11, a center folded band body 19 is formed by flattening out the tubular film into the band body 19, forming the slit 37 by longitudinally cutting the band body 19 substantially at the center of the width thereof defining the fold portion, and folding the band body 19 in a manner to place this slit 37 outside. This center folded band body 19 has a pair of mountain fold portions 45 vertically overlapped on one widthwise side 49 thereof and one mountain fold portion 45 and opposite slit edges 61, 61 overlapped on the other widthwise side 51 thereof. Namely, the center folded band body 19 is subjected to a so-called double-leafed fourfold so as to be substantially folded in an M-shape or in four layers.

According to an agricultural film 11, the center folded band body 19 is formed by flattening out the tubular film with the antifog coating film formed on the outer periphery thereof into the band body 19, forming the slit 37 by longitudinally cutting the band body 19 substantially at the center of the width thereof defining the fold portion, and folding the band body 19 inwards on this slit 37 as the fold center. This center folded band body 19 has a pair of mountain fold portions 45 vertically overlapped on one widthwise side 49 thereof and one mountain fold portion 45 on the other widthwise side 51 thereof. Namely, the center folded band body 19 is subjected to a so-called double-leafed fourfold so as to be folded in four layers. The antifog coating film is formed on the outside of each of these mountain fold portions 45, but is not formed on an inside portion opposite from the mountain fold portion 45, namely the valley fold portion 47. This ensures that the valley fold portion 47 is less prone to crack formation and the like after the band body 19 is unfolded, the cracks and the like resulting from the face-to-face contact between the antifog coating film bearing surfaces of the overlapped films.

According to an agricultural film 11, the tubular film is flattened out into the band body 19 and subsequently, the slit 37 is formed by cutting the band body 19 at a cut portion 0 to 10 cm away from the folding position longitudinally conforming to the substantial center of the width thereof. The band body 19 is folded into four layers and has a pair of mountain fold portions 45 vertically overlapped on one widthwise side 49 thereof. On the other widthwise side 51, the film is doubled to form double mountain fold portions 45, 46. In the meantime, double valley fold portions 47, 48 are formed on the other widthwise side 51. A fold-back portion between an edge of the slit 37 and the folding position (fold edge 57) is a flap-like edge portion 59, which serves as a reserve edge portion of the unfolded agricultural film 11 and is usable as an edge portion for fixing the extended agricultural film to an agricultural plastic greenhouse or the like.

According to an agricultural film 11, the longer one edge 53 of the overlapped edges 53, 55 may be used as the tab which can be held for turning over the longer edge relative to the other edge 55. Thus, the overlapped edges 53, 55 can be easily separated from each other.

According to an agricultural film 11, there is no shortage of the tab amount because of the misalignment amount of 1 mm or less, or no difficulty in turning over the edge because of the misalignment amount of 30 mm or more so that the misaligned portion is folded back or the distance between the one edge 53 and the other edge 55 in the misaligned relation is excessively long.

### Effects of Invention

According to a method for manufacturing agricultural film, even the wide agricultural film formed can be wound into the compact configuration by being folded into four layers.

According to a method for manufacturing agricultural film, the agricultural film formed with the antifog coating film is made less prone to the crack formation and coating film separation at the crease. Thus, the agricultural film excellent in durability can be produced.

According to a method for manufacturing agricultural film in accordance with the present invention, after the folded agriculture film is extended, an edge portion of the film can be used as the edge portion for fixing purpose.

According to a method for manufacturing agricultural film, when the folded agricultural film is extended, the extending operation is facilitated.

According to a method for manufacturing agricultural film in accordance with the present invention, the opposite edges in overlapped relation can be easily separated from each other.

According to a method for manufacturing agricultural film, even the wide agricultural film can be wound into the compact configuration.

According to a method for manufacturing agricultural film, the agricultural film is folded outwards placing the side formed with the antifog coating film outside and hence, the agricultural film is made less prone to the crack formation and coating film separation at the crease thereof, thus achieving good work efficiency and high durability.

According to a method for manufacturing agricultural film, the edge portion of the extended agricultural film can be used as the edge portion for fixing the agricultural film.

According to an agricultural film, when the folded agricultural film is extended, the extending operation is facilitated by virtue of the opposite edges misaligned in advance from each other.

According to an agricultural film, there is no shortage of the tab amount, or no difficulty in turning over the edge because the misaligned portion is folded back or the distance between the one edge and the other edge in the misaligned relation is excessively long. The agricultural film permits the opposite edges in the overlapping relation to be easily separated from each other, enhancing the work efficiency.

### BRIEF DESCRIPTION OF THE DRAWINGS

[Fig. 1] A conceptual diagram showing manufacturing equipment implementing a manufacturing method according to an embodiment of the present invention.
[Fig. 2] (a) is a perspective view showing a dried band body, (b) is a front view showing the band body formed with a slit in a lower film, and (c) is a front view showing the band body being folded with the slit placed inside.
[Fig. 3] A front view showing a folded agricultural film.
[Fig. 4] A front view showing the agricultural film when a film unfolding operation is started.
[Fig. 5] A perspective view showing the agricultural film wound in a roll.
[Fig. 6] A front view showing a band body formed with a slit in a lower film according to another embodiment.
[Fig. 7] A front view showing a band body being folded according to another embodiment.
[Fig. 8] A front view showing a folded band body according to another embodiment.
[Fig. 9] A front view showing a band body being folded according to another embodiment.
[Fig. 10] A front view showing a folded agricultural film according to another embodiment.

### MODE FOR CARRYING OUT THE INVENTION

The embodiments of the present invention will hereinbelow be described with reference to the accompanying drawings.

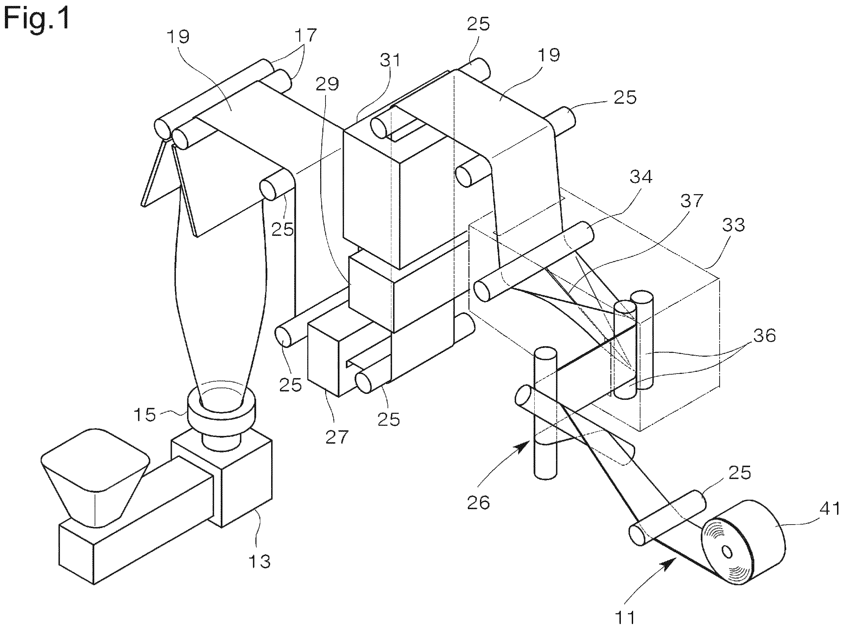

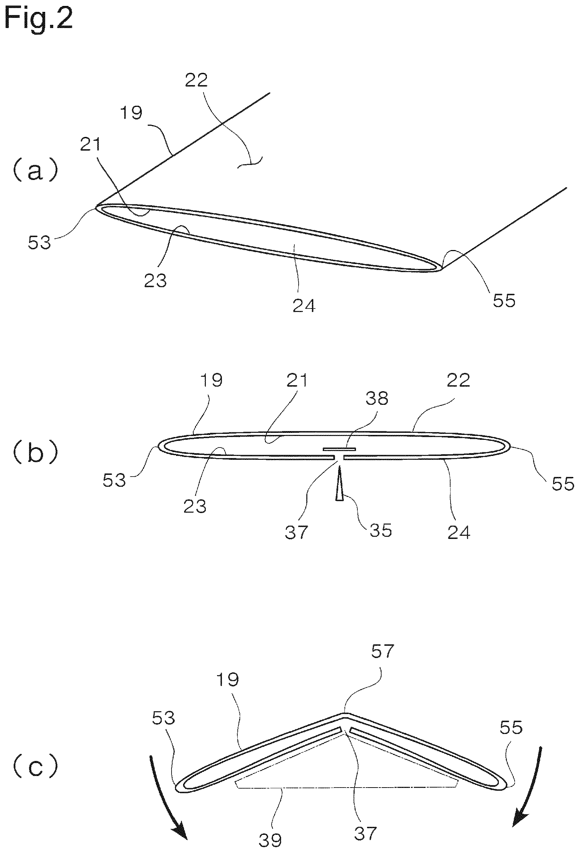

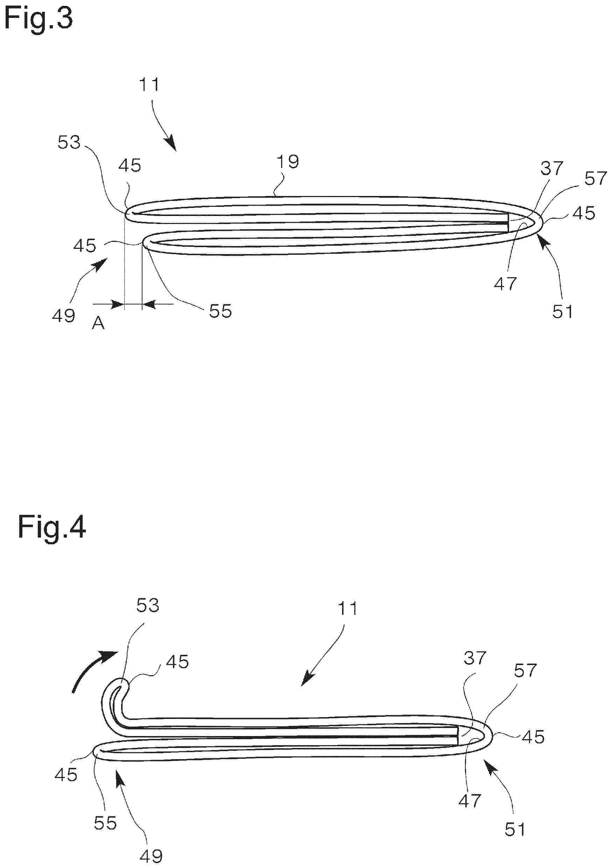

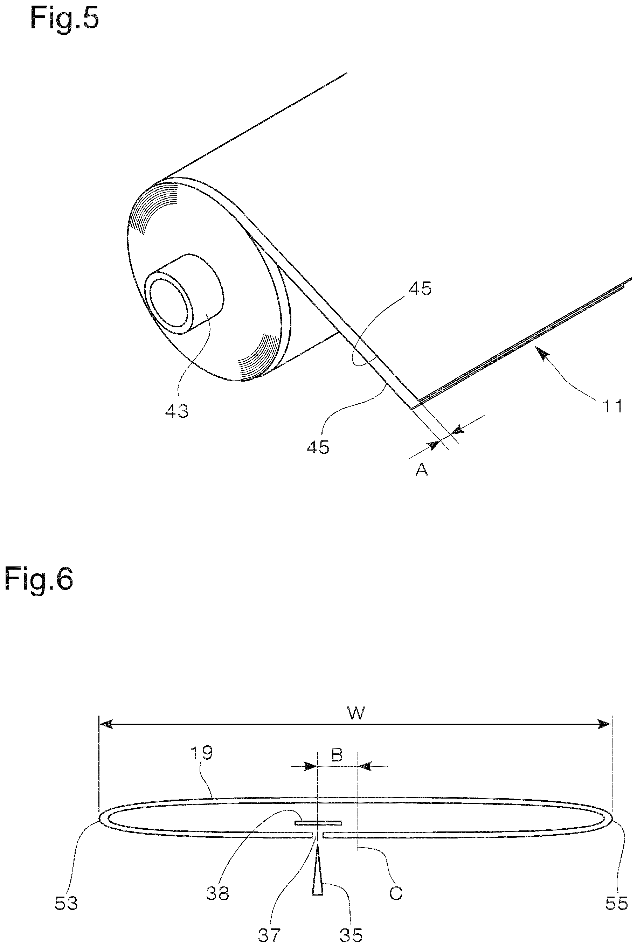

Fig. 1 is a conceptual diagram showing manufacturing equipment implementing a manufacturing method according to an embodiment of the present invention. Fig. 2(a) is a perspective view showing a dried band body. Fig. 2(b) is a front view showing the band body formed with a slit in a lower film. Fig. 2(c) is a front view showing the band body being folded with the slit placed inside. Fig. 3 is a front view showing a folded agricultural film. Fig. 4 is a front view showing the agricultural film when a film unfolding operation is started. Fig. 5 is a perspective view showing the agricultural film wound in a roll.

A method for manufacturing an agricultural film 11 according to an embodiment of the present invention is roughly divided into a flattening step, an antifog coating film forming step, a cutting step, and a folding step. The agricultural film 11 manufactured according to the manufacture method of the present invention is formed by a well-known inflation molding method and includes a single layer type and a multi-layer type which is improved in transparency, dust resistance, flexibility, strength and the like.

### [Flattening Step]

The thickness or the like of this agricultural film 11 is selected according to location of use such as area or environment, service life and the like, and is generally in the range of 0.05 to 0.3 mm. The agricultural film 11 is formed of a polyolefin-based resin, which is exemplified by a copolymer of α-olefin homopolymer with a different kind of monomer based on α-olefin. Examples of such copolymers include: propylene-based copolymers of propylene homopolymer with ethylene, 1-butylene, 1-pentene, or 1-hexene; and ethylene-based copolymers of ethylene homopolymer with 1-butene, 1-pentene, 1-hexene, 4-methyl-1-pentene, 1-octene, or vinyl acetate. These resins may be used alone or in combination of two or more types.

The agricultural film 11 formed by the inflation molding method is formed in a tubular shape immediately upon molding where a resin composition is extruded from an inflation die 15 fixed to an extruder 13 while injecting air inside so as to inflate the extruded mass to a predetermined width. The film web formed in the elongated tubular shape by the inflation molding method is reeled in as pinched between pinch rolls 17. As shown in Fig. 2(a), the film web is flattened out into a band body 19 having a constant width. While the band body 19 shown in Figs. 2 to 4 and Figs. 6 to 8 is depicted as a flat configuration including space for clarity of the present invention, the both sides of the band body 19 are actually adhered to each other. Specifically, the band body 19 is formed with two creases which form widthwise opposite edges 53, 55 on the right and left sides thereof as shown in the figure, so that an upper film 21 and a lower film 23 overlap with each other. The band body 19 is entrained around a plurality of guide rolls 25 disposed at predetermined positions of a transport path so as to be sequentially transported to an antifog film forming section, a cutting section, and a folding section disposed on a downstream side in a transport direction. In a winding section as a final stage, the band body 19 is wound into a roll of agricultural film 11.

### [Antifog Film Forming Step]

A coating film having an antifog property is formed, as desired, on one side of the agricultural film 11 by applying a modifier such as a coating-type antifogging agent. An inside layer of the inflation molded band body 19 typically defines an outside layer when used for greenhouse culture. In other words, the antifog coating film is formed on the outer side in the inflation molding process. This step of applying the coating-type antifogging agent is performed before steps of folding and cutting the film. Specifically, the coating film is formed on the film surface by the steps of: subjecting upper and lower sides 22, 24 defining an outside periphery of the band body 19 to corona discharge treatment by a corona treatment device 27, passing the band body 19 through an applicator 29 equipped with a reservoir containing a modifier such as the antifogging agent, and drying the film by a drying machine 31. While Fig. 1 shows one extruder 13, it is desirable to adopt a multi-layer inflation molding method employing 3 to 5 extruders.

The antifog coating film is essentially composed of an inorganic colloidal sol and a thermoplastic resin binder, which are used as a dispersion prepared by dispersing the inorganic colloidal sol in the thermoplastic resin binder.

Examples of the inorganic colloidal sol include silica sol, alumina sol and mixtures thereof. Examples of the usable silica sol include spherical or chain-like colloidal silica having a mean particle size of 5 to 200 nm, or more preferably of 10 to 130 nm. Such a silica sol may be exemplified by SNOWTEX 20, SNOWTEX XL, SNOWTEX UP (trade names: commercially available from Nissan Chemical Industries, Ltd.) and the like. The alumina sol may be exemplified by spherical, feathery, or rod-like alumina hydrate having a colloidal size of 5 to 200 nm. Such a alumina sol may be exemplified by ALUMINASOL (registered trademark) AS-100 and ALUMINASOL (registered trademark) AS-200(trade names: commercially available from Nissan Chemical Industries, Ltd.) and the like.

The thermoplastic resin binder may be any binder that can bind the inorganic colloidal sol to the outer side of the film. Examples of the usable resin binder include urethane-based resins, acryl-based resins, acrylic modified urethane resins and the like. Particularly, aqueous acryl modified urethane resin is preferred. As for the aqueous acryl modified urethane resin, polyester based anionic urethane resin is preferred, which can be prepared by, for example, polymerizing a hydroxyl group-containing acrylic compound under the presence of polyester-based anionic urethane resin, followed by reacting the resultant polymer with an active isocyanate compound.

A dispersion for forming the antifog coating film may contain, as needed, a silicone-based surfactant or a fluorine-based surfactant as an antifoaming agent and for the purpose of enhancing dispersibility and coatability. Examples of the silicone-based surfactant include polyether-modified silicone, polyglycerol-modified silicone and alkyl polyether co-modified silicone. Examples of the fluorine-based surfactant include surfactants having fluoroalkyl groups and fluoroalkenyl groups. These surfactants may be added to constitute 0.01 to 2 % by weight of the dispersion.

The compounding ratio of the above inorganic colloidal sol and the thermoplastic resin binder may preferably be in the range of 9:1 to 3:7 as a solid ratio. If the ratio of the thermoplastic resin binder is less than this range, adhesion between the antifog coating film and the film surface is inadequate. If the ratio of the inorganic colloidal sol is less than this range, the film cannot achieve sufficient antifog property.

The antifog coating film is formed as follows. A dispersion of the inorganic colloidal sol in the thermoplastic resin binder is applied by, for example, an immersion coating method or a coating method using a gravure coater, reverse roll coater, air knife coater or the like. A diluent is supplied to the vicinity of a bending portion of the film so as to decrease the concentration of the dispersion applied to the bending portion of the film. The antifog coating film is formed by applying the dispersion to the outside layer of the tubular multi-layer film produced by the above-described method, followed by drying the dispersion using hot air at temperatures of 50 to 150°C (dilution method).

The antifog coating film may be formed using another method. After the above-described coating method is performed to apply the dispersion of the inorganic colloidal sol in the thermoplastic resin binder to the outside layer of the tubular multi-layer film produced by the above-described method, an excessive dispersion is blown away by applying air to the bending portion of the above multi-layer film, followed by hot-air drying at temperatures of 50 to 150°C (air-blow method).

The antifog coating film may be formed using still another method. After the above-described coating method is performed to apply the dispersion of the inorganic colloidal sol in the thermoplastic resin binder to the outside layer of the tubular multi-layer film produced by the above-described method, the coating solution at the bending portion of the above tubular multi-layer film is removed by scraping, followed by hot-air drying at temperatures of 50 to 150°C (multiple layer configuration method).

The dried antifog coating films formed by the above methods may preferably have a mean film thickness of 0.3 to 5 µm, or more preferably of 0.5 to 2 µm, although the film thickness may vary depending upon the type of the antifog coating film or the required antifogging performance.

It is preferred that the bending portion of the antifog coating film has as close a thickness as possible to the mean thickness of a flat portion of the antifog coating film. From the viewpoint of reducing the potential crack formation at the crease in the long-term use of the film, the bending portion may preferably have a thickness at last equal to or less than twice the mean thickness of the above flat portion.

It is also preferred in terms of securing the antifogging performance that the bending portion of the coating film has a thickness at least equal to or more than 0.5 times the mean thickness of the above flat portion.

During the manufacture of the above film, a variety of additives such as a variety of antifogging agents, heat retaining agents such as hydrotalcites and aluminum silicate, antimisting agents, thermal stabilizers, antioxidants, hindered amine light stabilizer, ultraviolet absorbers, slipping agents and the like may be added for imparting functions to this film.

### [Cutting Step]

The film web constituting the band body 19 formed with the antifog coating film is subjected to a cutting/folding device 33 where the film web is partially cut by cutting means such as a cutter 35 in a longitudinal direction in which the film web is transported, as shown in Fig. 2(b). After drying the antifog coating film, this cutting operation is performed by forming a slit 37 in one of the upper film 21 and the lower film 23 of the bond body 19 at a predetermined position in a widthwise direction thereof, e.g., substantially at the center, and in the longitudinal direction in which the band body 19 is formed. The slit 37 is cut by using the cutter 35 disposed outside the band body 19 and a cut support plate 38 disposed inside the band body 19. In the cutting/folding device 33 shown in Fig. 1, the slit 37 is cut just before a guide roll 34.

### [Folding Step]

The band body 19 formed with the slit 37 has a fold portion defined by the above cut portion as shown in Fig. 2(c). With this cut portion set as the fold center, the band body 19 is folded along this slit 37 by means of the fold support body 39 and the like in a manner to place the slit 37 inside. As shown in Fig. 1, the equipment is provided with, for example, pinch rolls 36, the axial direction of which is perpendicular to the guide rolls 25, 34 for guiding the band body 19 in transportation. After passing the guide roll 34 subsequent to the formation of the slit 37, therefore, the band body 19 is valley folded along the slit 37 placed inside, and transported in this folded state. Thus, the band body 19 is folded into four layers producing three creases, namely subjected to a so-called double-leafed fourfold. It is noted here that the band body 19 is folded with the widthwise opposite edges 53, 55 thereof misaligned from each other by a predetermined amount, as shown in Fig. 3. The widthwise opposite edges 53, 55 are overlapped with each other as exhibiting misalignment A of a predetermined length which is defined to be in the range of 1 to 30 mm in the widthwise direction, or more preferably in the range of 3 to 20 mm. Thus, one edge 53 of the overlapped films extends longer than the other edge 55.

The definition that the predetermined amount of misalignment A is in the range of 1 to 30 mm is effective to ensure that there is no shortage of the tab amount because of the misalignment amount of 1 mm or less, or no difficulty in turning over the edge because of the misalignment amount of 30 mm or more so that the misaligned portion is folded back or a distance between the one edge and the other edge in the misaligned relation is excessively long. Therefore, it is easy to pull one of the opposite edges 53, 55 in overlapped relation away from the other, as shown in Fig. 4.

The fourfold film is fed to a winder 41 via a deflecting guide roll 26, as shown in Fig. 1. The winder 41 winds the film around a paper tube 43 as a core so that the film is wound into a roll, as shown in Fig. 5. The agricultural film 11 thus wound into a roll makes a web roll subjected to storage and transportation prior to the film unfolding operation.

When extended for agricultural plastic greenhouse application, the agricultural film 11 of this configuration is reeled out from the film roll. The agricultural film is unfolded by pulling away the edge portions with the defined misalignment A from each other so as to separate the folded adhered films from each other.

The agricultural film 11 has the edge portions exhibiting the misalignment A. One edge 53 of the overlapped edges extends longer than the other edge 55. In the operation of unfolding this film, the films can be easily pulled away from each other by holding the one edge 53 as the tab and turning over the one edge relative to the other edge 55 as shown in Fig. 4. This prevents the complication of the extending operation of the folded agricultural film 11 and permits the agricultural film to be easily extended for agricultural plastic greenhouse application.

If the folded film suffers film-to-film tight adhesion, if the film is formed of a pliable resin material, or if the film surface becomes sticky because of bleeding-out of the additives contained in the film itself, the above-described overlapped edges 53, 55 exhibiting the misalignment A permit the films to be easily pulled away from each other. Thus, the folded film can be unfolded and hence, the film extending operation is not lowered in efficiency.

According to the method for manufacturing the agricultural film 11, the tubular agricultural film 11 formed with the antifog coating film on the outer periphery thereof is flattened out into the band body 19. The band body 19 is folded inwards on the slit 37 formed substantially centrally of the width thereof whereby a center folded band body 19 in four layers is formed as shown in Fig. 3. The center folded band body 19 has a pair of mountain fold portions 45 vertically overlapped on one widthwise side 49, namely the one edge 53 and the other edge 55 overlapped with each other. Further, the center folded band body 19 has a fold edge 57 defined by one mountain fold portion 45 on the other widthwise side 51 thereof. The antifog coating film is formed on the outside of all these mountain fold portions 45, but is not formed on the inside portion across the agricultural film 11 from the mountain fold portion 45, namely a valley fold portion 47. This ensures that the valley fold portion 47 is less prone to the crack formation and coating film separation after the agricultural film is unfolded, the cracks and coating film separation resulting from face-to-face contact between antifog coating film bearing surfaces of the overlapped films.

According to the method for manufacturing the agricultural film 11 in accordance with the embodiment, therefore, the agricultural film 11 formed with the antifog coating film is made less prone to the crack formation at the crease. Thus, the agricultural film 11 excellent in durability can be produced.

The foregoing embodiment illustrates the band body 19 in which the forming position of the slit 37 in the cutting step coincides with the folding position of the film in the folding step and which is folded into four layers by double-leafed fourfold making no crease along the cut edges defined by the slit 37. Alternatively, the band body may also be folded in a manner that the folding position does not coincide with the position of the slit 37 defining the cut portion but is shifted in conformity with the slit 37. That is, the band body 19 may be folded at the folding position shifted from the edge of this slit 37.

In the flattened band body 19, as shown in Fig. 6, a folding position C is located substantially at the center of the width W thereof. In the subsequent cutting step, the slit 37 is formed at a position shifted from this substantially central folding position C by a formation width B of 0 to 10 cm, or more preferably 0 to 5 cm. Similarly to the above, the slit 37 is formed by means of the cut support plate 38 and the cutter 35 in the longitudinal direction in which the band body 19 is formed. That is, the folding position C is located in parallel with the slit 37 via the predetermined width B.

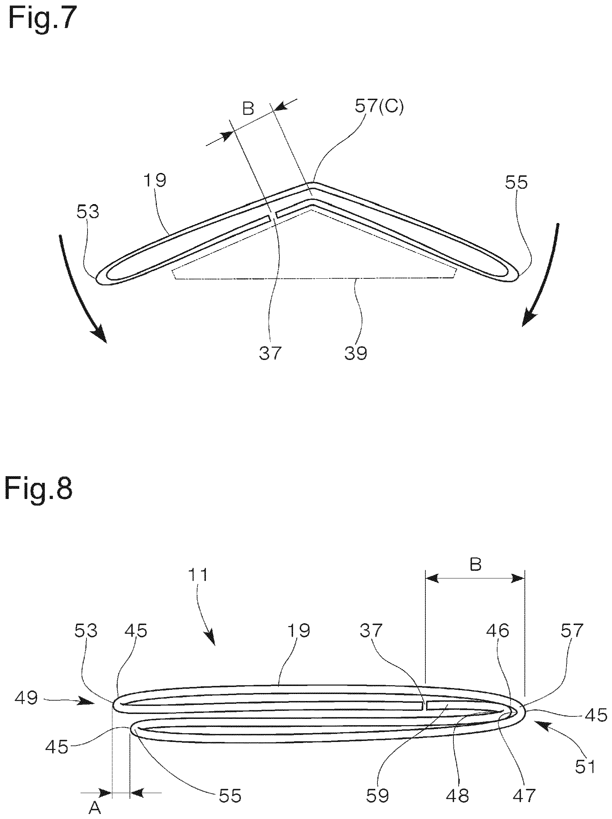

The formation of the slit 37 is followed by the folding step where the band body 19 is folded at a position spaced from the edge of the slit 37 by the predetermined width B, as shown in Fig. 7. By using the fold support plate 39 and the like, the band body 19 is folded in conformity with the slit 37 in a manner to place the slit 37 inside. This folding position defines the fold edge 57. A fold-back portion defined by the predetermined width B between this folding position and the slit 37 is a flap-like edge portion 59. In this agricultural film 11, as shown in Fig. 8, the band body 19 is folded into four layers. A pair of mountain fold portions 45, 46 are vertically overlapped with each other on the one widthwise side 49. Further, the film is doubled to form double mountain folds 45, 46 on the other widthwise side 51, where double valley fold portions 47, 48 are formed. The valley fold portion 48 formed with the flap-like edge portion 59 sustains tight adhesion between the antifog coating films. When the folded band body 19 is unfolded, however, the flap-like edge portion is located at the outermost edge, forming a reserve edge portion of the unfolded agricultural film 11. When the agricultural film is extended on an agricultural plastic greenhouse or the like, this flap-like edge portion 59 can be used as an edge portion for fixing the agricultural film to a frame structure. This edge portion is not exposed on an inside of the house and hence, is not required of the antifog property. Therefore, it does not matter if cracks or the like occur in the antifog coating film of this portion. Namely, the edge portion for fixing the agricultural film to the agricultural plastic greenhouse can be formed in advance as the flap-like edge portion 59 during the folding operation.

The above embodiment illustrates the example where in the folding step following the cutting step, the band body 19 is folded along the slit 37 in a manner to place the slit 37 inside, and into four layers. Alternatively, the band body 19 may also be folded along the slit 37 as the cut portion in a manner to place the slit 37 outside.

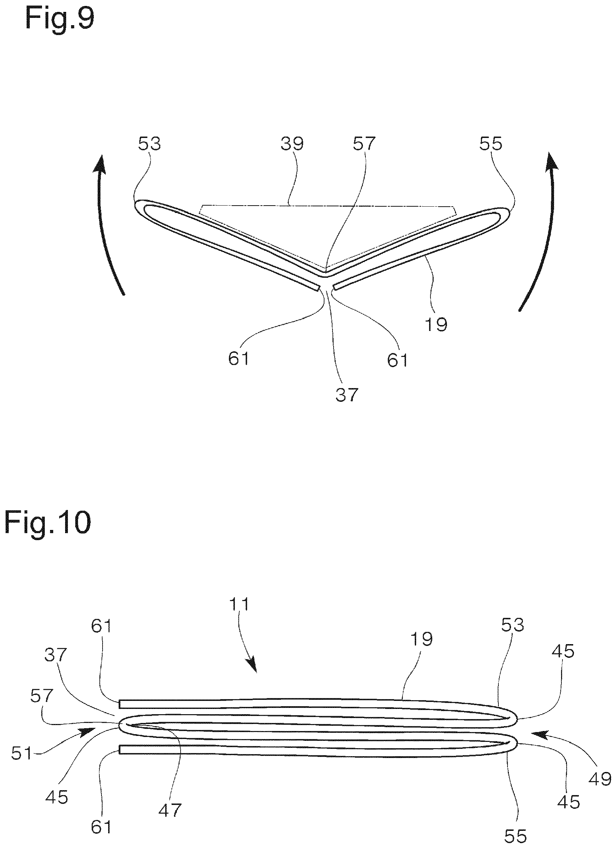

As shown in Fig. 9, the slit 37 is formed by cutting a film on one of the two sides of the band body 19 substantially at the center in the widthwise direction thereof. In the folding step subsequent to the cutting of the band body 19, the slit 37 is placed on the outside by means of the fold support body 39 and the like, while a film on the other side opposite from to the film on the one side formed with the slit 37 is folded on the fold center. This folded end defines the fold edge 57. Subsequently, the band body 19 is folded in a manner to bring the widthwise opposite edges 53, 55 into an overlapping relation so as to form the valley fold portion 47 at the fold edge 57 and to make the widthwise opposite edges 53, 55 overlap with each other as a pair of mountain fold portions 45, 45. At this time, opposite slit edges 61, 61 of the slit 37 are aligned with each other and each of the slit edges overlaps on the mountain fold portion 45 at the fold edge 57, thus forming the other widthwise side 51. In this folding step, the pair of mounting fold portions 45 on the one widthwise side 49 may overlap as exhibiting the misalignment of the predetermined length as described above, while the opposite slit edges 61, 61 and the mountain fold portion 45 on the other widthwise side 51 may similarly overlap as individually exhibiting the misalignment of the predetermined length. By defining such a misalignment in advance, the misaligned portion can be used as the tab to be held for unfolding the folded band body 19. Thus, the operation of turning over the folded band body 19 is facilitated.

According to this agricultural film 11, as shown in Fig. 10, the band body 19 is folded into four layers and has the pair of mountain fold portions 45, 45 vertically overlapped on the one widthwise side 49 thereof and the opposite slit edges 61, 61 overlapped via the mountain fold portion 45 on the other widthwise side 51 thereof. Thus, the band body 19 is substantially folded in the M-shape. Accordingly, even the agricultural film made in the great width can be folded into the compact configuration reduced in width and wound into a roll. List of Reference Signs

- 11:: AGRICULTURAL FILM
- 19:: BAND BODY
- 21:: UPPER FILM
- 23:: LOWER FILM
- 37:: SLIT
- 61:: SLIT EDGE

## Claims

1. A method of manufacturing agricultural film comprising the steps of:
flattening an elongate tubular film (11) into a band body (19) having a constant width (W);
**characterised in that** the method further comprises:
forming an antifog coating film on an outer periphery of the band body (19);
cutting a lower film (23) or an upper film (21) of the band body (19) after the drying of the antifog coating film by forming a slit (37) at a predetermined position in a widthwise direction (W) of the band body (19) and in a longitudinal direction in which the band body (19) is formed;
folding the band body (19) into four layers, with widthwise opposite edges (53, 55) overlapping each other; and
winding the fourfold band body (19) into a roll.

2. A method of manufacturing agricultural film according to claim 1, wherein the band body (19) is folded in a manner to place the slit (37) outside.

3. A method of manufacturing agricultural film (11) according to claim 1, wherein the band body (19) is folded in a manner to place the slit (37) inside.

4. A method of manufacturing agricultural film (11) according to claim 3, wherein a folding position of the band body (19) is in conformity with the slit or at a distance of substantially 0 to 10 cm from the slit edge.

5. A method of manufacturing agricultural film (11) according to claim 3 or 4, wherein in the folding step, the band body (19) is folded with widthwise opposite edges (53, 55) thereof misaligned from each other by a predetermined amount.

6. A method of manufacturing agricultural film according to claim 5, wherein the predetermined amount is in the range of substantially 1 to 30 mm.

7. An agricultural film comprising:-
an elongate tubular film (11) flattened out into a band body (19) having a constant width (W);
the band body (19) having a slit (37) at a predetermined position in the widthwise direction (W) of the band body and in a longitudinal direction in which the band body (19) is formed;
**characterised in that** the film further comprises:
an antifog coating film on an outer periphery of the band body (19); and
a band body (19) folded into four layers with widthwise opposite edges (53,55) overlapping each other, the band body being wound into a roll.

8. An agricultural film according to claim 7, wherein the band body (19) is folded in a manner to place the slit (37) outside.

9. An agricultural film according to claim 7, wherein the band body (19) is folded in a manner to place the slit (37) inside.

10. An agricultural film according to claim 9, wherein a fold portion of the band body (19) is in conformity with the slit (37) or at a distance of substantially 0 to 10 cm from the slit edge.

11. An agricultural film according to claim 9 or 10, wherein the band body (19) is folded with widthwise opposite edges (53, 55) thereof misaligned from each other by a predetermined amount.

12. An agricultural film according to claim 11, wherein the predetermined amount is in the range of substantially 1 to 30 mm.

## Patentansprüche

1. Verfahren zum Herstellen einer landwirtschaftlichen Folie, folgende Schritte umfassend:
Glätten einer länglichen Schlauchfolie (11) in einen Bandkörper (19) mit einer gleichbleibenden Breite (W);
**dadurch gekennzeichnet, dass** das Verfahren ferner umfasst:
Bilden einer Antibeschlagsbeschichtungsfolie auf einem äußeren Rand des Bandkörpers (19);
Schneiden einer unteren Folie (23) oder einer oberen Folie (21) des Bandkörpers (19) nach dem Trocknen der Antibeschlagsbeschichtungsfolie durch das Bilden eines Spaltes (37) an einer vorgegebenen Stelle in einer Breitenrichtung (W) des Bandkörpers (19) und in einer Längsrichtung, in die der Bandkörper (19) geformt ist;
Falten des Bandkörpers (19) in vier Schichten, mit einander in Breitenrichtung gegenüberliegenden Kanten (53, 55) die einander überlappen; und
Winden des vierfachgefalteten Bandkörpers (19) in eine Rolle.

2. Verfahren zum Herstellen einer landwirtschaftlichen Folie nach Anspruch 1, wobei der Bandkörper (19) derartig gefaltet ist, dass der Spalt (37) außen platziert ist.

3. Verfahren zum Herstellen einer landwirtschaftlichen Folie (11) nach Anspruch 1, wobei der Bandkörper (19) derartig gefaltet ist, dass der Spalt (37) innen platziert ist.

4. Verfahren zum Herstellen einer landwirtschaftlichen Folie (11) nach Anspruch 3, wobei eine Faltposition des Bandkörpers (19) mit dem Spalt übereinstimmt oder im Wesentlichen 0 bis 10 cm vom Rand des Spaltes entfernt ist.

5. Verfahren zum Herstellen einer landwirtschaftlichen Folie (11) nach Anspruch 3 oder 4, wobei der Bandkörper (19) während des Faltschrittes mit einander in Breitenrichtung gegenüberliegenden Kanten (53, 55) gefaltet ist, die entsprechend eines vorgegebenen Betrags voneinander versetzt sind.

6. Verfahren zum Herstellen einer landwirtschaftlichen Folie nach Anspruch 5, wobei der vorgegebene Betrag im Wesentlichen im Bereich von 1 bis 30 mm ist.

7. Landwirtschaftliche Folie, die Folgendes umfasst:
eine längliche Schlauchfolie (11), die in einen Bandkörper (19) mit einer gleichbleibenden Breite (W) geglättet ist;
wobei der Bandkörper (19) einen Spalt (37) an einer vorgegebenen Stelle in der Breitenrichtung (W) des Bandkörpers und in einer Längsrichtung, in die der Bandkörper (19) geformt ist, aufweist;
**dadurch gekennzeichnet, dass** die Folie ferner Folgendes umfasst:
eine Antibeschlagsbeschichtungsfolie auf einem äußeren Rand des Bandkörpers (19); und
einen Bandkörper (19), der in vier Schichten gefaltet ist, mit einander in Breitenrichtung gegenüberliegenden Kanten (53, 55), die einander überlappen, wobei der Bandkörper in eine Rolle gewunden ist.

8. Landwirtschaftliche Folie nach Anspruch 7, wobei der Bandkörper (19) derartig gefaltet ist, dass der Spalt (37) außen platziert ist.

9. Landwirtschaftliche Folie nach Anspruch 7, wobei der Bandkörper (19) derartig gefaltet ist, dass der Spalt (37) innen platziert ist.

10. Landwirtschaftliche Folie nach Anspruch 9, wobei ein Faltabschnitt des Bandkörpers (19) mit dem Spalt (37) übereinstimmt oder im Wesentlichen 0 bis 10 cm von dem Rand des Spaltes entfernt ist.

11. Landwirtschaftliche Folie nach Anspruch 9 oder 10, wobei der Bandkörper (19) mit einander in Breitenrichtung gegenüberliegenden Kanten (53, 55) gefaltet ist, die entsprechend eines vorgegebenen Betrags voneinander versetzt sind.

12. Landwirtschaftliche Folie nach Anspruch 11, wobei der vorgegebene Betrag im Wesentlichen im Bereich von 1 bis 30 mm ist.

## Revendications

1. Procédé de fabrication de film agricole comprenant les étapes de :
aplatissement d'un film tubulaire allongé (11) en un corps de bande (19) ayant une largeur constante (W) ;
**caractérisé en ce que** le procédé comprend en outre :
la formation d'un film de revêtement antibuée sur une périphérie externe du corps de bande (19) ;
le découpage d'un film inférieur (23) ou d'un film supérieur (21) du corps de bande (19) après le séchage du film de revêtement antibuée par formation d'une fente (37) à une position prédéterminée dans le sens de la largeur (W) du corps de bande (19) et dans une direction longitudinale dans laquelle le corps de bande (19) est formé ;
le pliage du corps de bande (19) en quatre couches, avec des bords opposés dans le sens de la largeur (53, 55) se chevauchant l'un l'autre ; et
l'enroulement du corps de bande à quatre plis (19) en un rouleau.

2. Procédé de fabrication de film agricole selon la revendication 1, dans lequel le corps de bande (19) est plié de manière à placer la fente (37) à l'extérieur.

3. Procédé de fabrication de film agricole (11) selon la revendication 1, dans lequel le corps de bande (19) est plié de manière à placer la fente (37) à l'intérieur.

4. Procédé de fabrication de film agricole (11) selon la revendication 3, dans lequel une position de pliage du corps de bande (19) est en conformité avec la fente ou à une distance de sensiblement 0 à 10 cm du bord de la fente.

5. Procédé de fabrication de film agricole (11) selon la revendication 3 ou 4, dans lequel dans l'étape de pliage, le corps de bande (19) est plié avec des bords opposés dans le sens de la largeur (53, 55) de celui-ci mai alignés l'un par rapport à l'autre d'une quantité prédéterminée.

6. Procédé de fabrication de film agricole selon la revendication 5, dans lequel la quantité prédéterminée est dans la plage de sensiblement 1 à 30 mm.

7. Film agricole comprenant :
un film tubulaire allongé (11) aplati en un corps de bande (19) ayant une largeur constante (W) ;
le corps de bande (19) ayant une fente (37) à une position prédéterminée dans le sens de la largeur (W) du corps de bande et dans une direction longitudinale dans laquelle le corps de bande (19) est formé ;
**caractérisé en ce que** le film comprend en outre :
un film de revêtement antibuée sur une périphérie externe du corps de bande (19) ; et
un corps de bande (19) plié en quatre couches avec des bords opposés dans le sens de la largeur (53, 55) se chevauchant l'un l'autre, le corps de bande étant enroulé en un rouleau.

8. Film agricole selon la revendication 7, dans lequel le corps de bande (19) est plié de manière à placer la fente (37) à l'extérieur.

9. Film agricole selon la revendication 7, dans lequel le corps de bande (19) est plié de manière à placer la fente (37) à l'intérieur.

10. Film agricole selon la revendication 9, dans lequel une partie de pliage du corps de bande (19) est en conformité avec la fente (37) ou à une distance de sensiblement 0 à 10 cm du bord de la fente.

11. Film agricole selon la revendication 9 ou 10, dans lequel le corps de bande (19) est plié avec des bords opposés dans le sens de la largeur (53, 55) de celui-ci mal alignés l'un par rapport à l'autre d'une quantité prédéterminée.

12. Film agricole selon la revendication 11, dans lequel la quantité prédéterminée est dans la plage de sensiblement 1 à 30 mm.
